# EUROPEAN PATENT SPECIFICATION

(11) **EP 2 773 681 B1**
(45) Date of publication and mention of the grant of the patent: **10.01.2018**
(21) Application number: 12787619.1
(22) Date of filing: 02.11.2012
(51) Int. Cl.: C08G 18/08, C09D 175/04, B05D 1/36

(54) **PROCESS FOR THE PRODUCTION OF AN AUTOMOTIVE OEM MULTI-LAYER COATING**
VERFAHREN ZUR HERSTELLUNG EINER MEHRSCHICHTIGEN KFZ-ORIGINALHERSTELLERBESCHICHTUNG
PROCÉDÉ DE PRODUCTION D'UN REVÊTEMENT MULTICOUCHE MEO POUR AUTOMOBILE

(30) Priority: 02.11.2011 US 201161554579 P
(43) Date of publication of application: 10.09.2014
(73) Proprietor: Coatings Foreign IP Co. LLC, Wilmington, DE 19801 (US)
(72) Inventor: STOFFEL, Petra, 50939 Koeln (DE); BRUNNER, Marcus, 42111 Wuppertal (DE)
(74) Representative: LKGLOBAL Lorenz & Kopf PartG mbB Patentanwälte
(86) International application number: PCT/US2012/063452
(87) International publication number: WO 2013/067452

(56) References cited:
- EP-A1- 0 697 424
- WO-A1-97/47401
- WO-A2-2007/073871

## Description

### Field of the Invention

The invention relates to a process for the production of an automotive OEM (original equipment manufacture) multi-layer coating.

### Description of the Prior Art

Automotive coatings consist, as a rule, of a separately baked electrodeposition coating (EDC) primer, a separately baked primer surfacer layer (filler layer) applied thereto and a top coat applied thereto comprising a wet-on-wet applied color- and/or special effect-imparting base coat layer and a protective, gloss-imparting clear top coat layer.

A process is known from WO 97/47401 A1 for the production of decorative multi-layer coatings, which process allows for the elimination of the application and separate baking of a primer surfacer layer. In this process a multi-layer coating structure comprising (i) a modified water-borne base coat and a clear top coat or (ii) a modified water-borne base coat, an unmodified water-borne base coat and a clear top coat is applied comprising the joint curing of these coating layers that are applied to a baked EDC primer. The modified water-borne base coat is produced by mixing an unmodified water-borne base coat which contains a hydroxyl-functional binder with a polyisocyanate admixture component. The polyisocyanate admixture component may be a solution of polyisocyanate crosslinker in an organic solvent mixture containing N-alkyl pyrrolidone. The polyisocyanate admixture component can be added to a number of unmodified water-borne base coats each having a different color. The unmodified water-borne base coats and the polyisocyanate admixture component are each guided in an own circulating line and the circulating lines are connected via valves with a static mixer.

The mixing can be performed using a static mixer, for example, a conventional static mixer such as, for example, a Kenics mixer. Kenics mixers are static mixers typically used in automotive OEM mass production coating lines. The mixing with the static mixer allows for a continuous mixing of the unmodified water-borne base coat and the polyisocyanate admixture component shortly before the modified water-borne base coat is spray-applied. The modified water-borne base coat leaves the static mixer and it is fed to the spray-application devices.

When a color change is desired, it is necessary to rinse the installations (static mixer, spray-application devices, valves and any connecting pipe work) which have been in contact with coating material of the previous color. In other words, before switching to the application of a new, i.e., the subsequent color, the installations are cleaned from any residues of the previously processed color; such rinsing is automatically performed in automotive mass-production coating installations and an aqueous cleansing composition is typically used as rinsing medium.

WO 2007/073871 A2 discloses aqueous coating materials containing (A) at least one ionically and/or non-ionically stabilized polyurethane which may be saturated, unsaturated and/or grafted with olefinically unsaturated compounds, (B) at least one wetting agent or dispersant, and (C) at least one organic solvent selected from the group consisting of dimethyl sulfoxide, sulfolane, 2-methyl-1-butanol, 3-methyl-1-butanol, 2-methyl-1-pentanol, hexyl glycol, 1,6-hexanediol, diethylene glycol, triethylene glycol, glycerol, solutions of trimethylolpropane, solutions of pentaerythritol, solutions of sorbitol, reactive polyether polyols having a number average molecular weight of 110-6000 and a hydroxyl number of 25 to 1000 mg KOH/g, propylene glycol monobutylether, dipropylene glycol dimethyl ether, glycerol ethoxylate, ethyl-3-ethoxy propionate, γ-butyrolactone (gamma-butyrolactone), N-(2-hydroxylethyl)-piperidine, N-methylmorpholine, N-(2-hydroxylethyl)-morpholine, N-acetylmorpholine, N-cyclohexylpyrrolidone and N-octyl-2-pyrrolidone.

EP 0 697 424 describes mixtures containing (a) water-emulsifiable polyisocyanates and (b) carbonate esters or lactones as organic solvents.

Also described are (i) aq. polymer dispersions, pref. of polyurethanes or radically polymerised polymers, containing these mixtures, (ii) adhesives, coating materials or impregnating materials based on aq. dispersions containing these mixtures, and (iii) substrates coated, impregnated or bonded with the above mixtures or dispersions.

### Summary of the Invention

Also described are (i) aq. polymer dispersions, pref. of polyurethanes or radically polymerised polymers, containing these mixtures, (ii) adhesives, coating materials or impregnating materials based on aq. dispersions containing these mixtures, and (iii) substrates coated, impregnated or bonded with the above mixtures or dispersions.

Document WO 9747401 is directed to a process for multi-coat painting by the electrophoretic application of a primer onto a conductive substrate (see clam 1). Examples 1 and 2 disclose a process, wherein the base coat is modified with a polyisocyanate dissolved in a mixture of N-Methyl pyrrolidone and butyl diglycol acetate.

### Summary of the Invention

It has been found that the aforedescribed automotive OEM multi-layer coating process involving the method disclosed in WO 97/47401 A1 can be improved by replacing the N-alkyl pyrrolidone in the polyisocyanate admixture component by γ-butyrolactone. Apparently, but unexpectedly, the reactivity of the polyisocyanate towards hydroxyl groups of the hydroxyl-functional binder and towards water is reduced in the presence of the γ-butyrolactone. Potlife of the modified water-borne base coat leaving the static mixer can be increased which may find its expression in an improved appearance of the finished multi-layer coating. Moreover, the application process is more robust with regard to an easier automatic rinsing of the coating equipment, i.e. less lump formation within the coating installation is perceived when the N-alkyl pyrrolidone in the polyisocyanate admixture component is replaced by γ-butyrolactone. While not wishing to be bound by any theory, it is surmised that lump formation is a result of a reaction of polyisocyanate getting accidentally into contact with traces of water originating from water-borne base coat or aqueous cleansing composition and that urea lumps or incrustations may be formed within the coating installation as a result of such reaction.

The invention is directed to a process for the production of an automotive OEM multi-layer coating, comprising the steps:
(1) applying a base coat layer onto an automotive substrate,
(2) applying a clear top coat layer onto the base coat layer, and
(3) jointly curing the base coat and clear top coat layers,
wherein the base coat layer is applied from a modified water-borne base coat produced by mixing an unmodified water-borne base coat with a polyisocyanate crosslinker component making use of a static mixer, and wherein the polyisocyanate crosslinker component comprises at least one polyisocyanate crosslinker and γ-butyrolactone as water-miscible solvent.

### Detailed Description of the Embodiments

The phrase "automotive OEM multi-layer coating" is used herein. It refers to an automotive original coating as opposed to an automotive refinish coating or repair coating. Automotive OEM multi-layer coatings are typically applied in an industrial mass-production coating line with a high degree of automatization.

In the process of the invention an automotive substrate is multi-layer coated. The automotive substrate can be a plastics or a metal substrate or a so-called mixed construction substrate comprising plastics as well as metal. The automotive substrate may in particular be an automotive body or an automotive body part; automotive bodies can be metal substrates or mixed construction substrates, while automotive body parts can be metal substrates, plastics substrates or mixed construction substrates. Automotive plastics substrates may be uncoated or they may have a precoating like a conductive primer layer. Automotive metal substrates may have a precoating like a conventional EDC primer layer and, optionally, also a conventional primer surfacer layer, although a conventional EDC primer layer only (without additional coating layers) is preferred as precoating.

In process step (1) the automotive substrate is provided, first of all, with a base coat layer. The base coat layer is the color- and/or special effect-imparting coating layer within the automotive OEM multi-layer coating produced by the process of the present invention. In other words, the automotive OEM multi-layer coating produced by the process of the present invention may have a solid color (color independent on the observation angle) or an effect color (color having a color and/or lightness flop dependent on the observation angle) in each case determined by the base coat layer which can visually be perceived through the outer clear top coat layer of the finished automotive OEM multi-layer coating.

The overall base coat film thickness may be in the range of, for example, 10 to 40 µm. The base coat layer may be applied from a so-called modified water-borne base coat or, in an embodiment, it may be applied in two layers or sub-layers. In the latter case, a first layer of the modified water-borne base coat is applied and a subsequent second layer of the corresponding unmodified water-borne base coat then is applied, or, in other words, between the application of the modified water-borne base coat and the clear top coat an additional coating layer is applied from the corresponding unmodified water-borne base coat; the film thickness of the layer applied from the modified water-borne base coat may be, for example, 5 to 25 µm and the film thickness of the subsequent layer applied from the corresponding unmodified water-borne base coat may be, for example, 3 to 20 µm.

The film thicknesses indicated in the present description and in the claims for coating layers refer in each case to dry film thicknesses.

In the description and in the claims, a distinction is drawn between unmodified and modified water-borne base coat. The modified water-borne base coat is a mixture of an unmodified water-borne base coat (i.e. the corresponding unmodified water-borne base coat of a given color) and a polyisocyanate crosslinker component, the mixture being prepared making use of a static mixer. Generally, there is a defined and prescribed mixing ratio between unmodified water-borne base coat and polyisocyanate crosslinker component. The mixing ratio for the preparation of the modified water-borne base coat lies in the range of, for example, 0.05 to 0.3 pbw (parts by weight) of polyisocyanate crosslinker component : 1 pbw of unmodified water-borne base coat.

The unmodified water-borne base coats are aqueous coating compositions having a total solids content in the range of, for example, 10 to 50 wt.% (weight-%). The unmodified water-borne basecoats comprise water, pigment(s) and a resin solids content formed by the solids contribution of at least one aqueous film-forming binder and of the following optional components: paste resin(s) and cross-linking agent(s) other than polyisocyanate crosslinkers. The unmodified water-borne basecoats may further comprise the following optional components: filler(s), organic solvent(s) and conventional additive(s). The unmodified water-borne base coats have a ratio by weight of pigment content to resin solids content of, for example, 0.05 : 1 to 2.5 : 1.

The unmodified water-borne base coats contain ionically and/or non-ionically stabilized aqueous binder systems. These are preferably anionically and/or non-ionically stabilized. Anionic stabilization is preferably achieved by at least partially neutralized carboxyl groups in the binder, while non-ionic stabilization is preferably achieved by lateral or terminal polyethylene oxide units in the binder.

As already said, the unmodified water-borne base coats contain one or more conventional film-forming binders. They may optionally also contain crosslinking agents other than polyisocyanate crosslinkers. Examples of conventional film-forming binders, which may be used, are conventional polyester, polyurethane, (meth)acrylic copolymer resins and/or hybrid binders derived from these classes of binder. Examples of crosslinking agents other than polyisocyanate crosslinkers include conventional melamine formaldehyde resin crosslinkers.

In a preferred embodiment, the unmodified water-borne base coat comprises a resin solids content comprising or even consisting of, one or more hydroxyl-functional binders. The hydroxyl value of the resin solids content of the unmodified water-borne base coat is then, for example, in the range of 5 to 120 mg KOH/g.

The unmodified water-borne base coats contain conventional pigments, for example, special effect pigments and/or pigments selected from among white, colored and black pigments. In other words, the unmodified water-borne base coats may be solid color base coats or effect base coats having a color and/or lightness flop.

Examples of special effect pigments are conventional pigments which impart to a coating color flop and/or lightness flop dependent on the angle of observation, such as, non-leafing metal pigments, for example, of aluminum, copper or other metals, interference pigments, such as, for example, metal oxide-coated metal pigments, for example, iron oxide-coated aluminum, coated mica, such as, for example, titanium dioxide-coated mica, graphite effect-imparting pigments, iron oxide in flake form, liquid crystal pigments, coated aluminum oxide pigments, coated silicon dioxide pigments.

Examples of white, colored and black pigments are the conventional inorganic or organic pigments known to the person skilled in the art, such as, for example, titanium dioxide, iron oxide pigments, carbon black, azo pigments, phthalocyanine pigments, quinacridone pigments, pyrrolopyrrole pigments, and perylene pigments.

The unmodified water-borne base coats may also contain fillers (extenders), for example, in a total proportion of 0 to 30 wt.%, relative to the resin solids content. The fillers do not constitute part of the pigment content of the unmodified water-borne base coats. Examples are barium sulfate, kaolin, talcum, silicon dioxide and layered silicates.

The special effect pigments are generally initially introduced in the form of a conventional commercial aqueous or non-aqueous paste, optionally, combined with preferably water-dilutable organic solvents and additives and then mixed with aqueous binder. Pulverulent special-effect pigments may first be processed with preferably water-dilutable organic solvents and additives to yield a paste.

White, colored and black pigments and/or fillers may, for example, be ground in a proportion of the aqueous binder. Grinding may preferably also take place in a special aqueous paste resin. Grinding may be performed in conventional assemblies known to the person skilled in the art. The formulation is then completed with the remaining proportion of the aqueous binder or of the aqueous paste resin.

The unmodified water-borne base coats may contain conventional additives, for example, in a total proportion of 0.1 to 15 wt.%, relative to the solids content thereof. Examples are antifoaming agents, wetting agents, adhesion promoters, catalysts, levelling agents, anticratering agents, rheology control agents, for example, thickeners, and light stabilizers, for example, UV absorbers and/or HALS-based compounds (HALS, hindered amine light stabilizers).

The unmodified water-borne base coats may contain conventional solvents, for example, in a total proportion of preferably less than 20 wt.%, particularly preferably, less than 15 wt.%, wherein the percentage by weight is based on total unmodified water-borne base coat. These are conventional coating solvents, which may originate, for example, from production of the binders or are added separately. Examples of such solvents are alcohols, for example, propanol, butanol, hexanol; glycol ethers, for example, diethylene glycol di-C1-C6-alkyl ether, dipropylene glycol di-C1-C6-alkyl ether, ethoxypropanol, ethylene glycol monobutyl ether; glycol ether esters, for example, methoxypropyl acetate, butyl glycol acetate; glycols, for example, ethylene glycol and/or propylene glycol, and the di- or trimers thereof; ketones, such as, methyl ethyl ketone, acetone, cyclohexanone; aromatic or aliphatic hydrocarbons, for example, toluene, xylene or linear or branched aliphatic C6-C12 hydrocarbons.

As already mentioned, the modified water-borne base coat applied in process step (1) of the invention is prepared by mixing the unmodified water-borne base coat with the polyisocyanate crosslinker component making use of a static mixer. Generally, the mixing operation can be performed following a defined and prescribed mixing ratio as has already been mentioned above.

The polyisocyanate crosslinker component comprises 50 to 90 wt.% of at least one polyisocyanate crosslinker and 10 to 50 wt.% of γ-butyrolactone as water-miscible solvent, wherein the percentage by weight is based on total polyisocyanate crosslinker component.

The total isocyanate content of the at least one polyisocyanate crosslinker is in general in a range from 2 to 40 wt.%, preferably, from 10 to 25 wt.% (calculated as NCO).

The at least one polyisocyanate crosslinker comprises one or more polyisocyanates with aliphatically, cycloaliphatically and/or araliphatically attached isocyanate groups. The polyisocyanates are typically derived from one or more diisocyanates selected among 1,6-hexane diisocyanate, tetramethylxylylene diisocyanate, isophorone diisocyanate, dicyclohexylmethane diisocyanate and cyclohexane diisocyanate. Examples of polyisocyanate derivatives are those which contain heteroatoms in the residue linking the isocyanate groups. Examples of these are polyisocyanates which contain carbodiimide groups, allophanate groups, isocyanurate groups, uretidione groups, urethane groups, acylated urea groups and/or biuret groups. The polyisocyanates preferably have an isocyanate functionality higher than 2, such as, for example, polyisocyanates of the uretidione or isocyanurate type produced by di- or trimerization of the above-mentioned diisocyanates. Further examples are polyisocyanates produced by reaction of the above-mentioned diisocyanates with water and containing biuret groups or polyisocyanates produced by reaction with polyols and containing urethane groups.

Of particular suitability are, for example, "coating polyisocyanates" based on 1,6-hexane diisocyanate, isophorone diisocyanate or dicyclohexylmethane diisocyanate. "Coating polyisocyanates" based on these diisocyanates means the per se known biuret, urethane, uretidione and/or isocyanurate group-containing derivatives of these diisocyanates.

The polyisocyanate crosslinker component comprises γ-butyrolactone as water-miscible solvent. It may also comprise a small amount, for example, up to 20 wt.% of one or more organic solvents inert towards free isocyanate and other than γ-butyrolactone, wherein the percentage by weight is based on total polyisocyanate crosslinker component. However, it is preferred that the polyisocyanate crosslinker component comprises γ-butyrolactone as the only organic solvent.

The term "organic solvent(s) inert towards free isocyanate" shall mean organic solvents as are conventional in the art of paint and coatings and which are free of groups reactive towards isocyanate. Examples include methoxypropyl acetate, methoxybutyl acetate, ethoxypropyl acetate, butyl glycol acetate and butyl diglycol acetate.

The polyisocyanate crosslinker component may contain at least one additive in a total proportion of, for example, up to 10 wt.%, based on the total weight of the polyisocyanate crosslinker component. Examples of additives are defoamers, anticratering agents, wetting agents, fillers, pigments and light stabilizers

In an embodiment, the polyisocyanate crosslinker component comprises 50 to 90 wt.% of the at least one polyisocyanate crosslinker, 10 to 50 wt.% of γ-butyrolactone, 0 to 20 wt.% of organic solvents inert towards free isocyanate and other than γ-butyrolactone, and 0 to 10 wt.% of at least one additive. In another embodiment, the polyisocyanate crosslinker component consists of 50 to 90 wt.% of the at least one polyisocyanate crosslinker, 10 to 50 wt.% of γ-butyrolactone, 0 to 20 wt.% of organic solvents inert towards free isocyanate and other than γ-butyrolactone, and 0 to 10 wt.% of at least one additive, wherein the sum of the wt.% totals 100 wt.% of the polyisocyanate crosslinker component. In still another embodiment, the polyisocyanate crosslinker component consists of 50 to 90 wt.% of the at least one polyisocyanate crosslinker and 10 to 50 wt.% of γ-butyrolactone, wherein the sum of the wt.% totals 100 wt.% of the polyisocyanate crosslinker component.

The modified water-borne base coat is prepared by mixing the (corresponding) unmodified water-borne base coat with the polyisocyanate crosslinker component making use of a static mixer. Static mixers represent mixing technology conventional in industrial coating facilities. A Kenics mixer is an example of a conventional static mixer. Kenics mixers are static mixers typically used in automotive OEM industrial production coating lines and they have a length of, for example, 40 to 200 mm. The use of the static mixer allows for a continuous mixing of the unmodified water-borne base coat and the polyisocyanate crosslinker component. The unmodified water-borne base coat and the polyisocyanate crosslinker component are mixed shortly before the resultant modified water-borne base coat is spray-applied. The modified water-borne base coat leaves the static mixer at its exit and it is fed to the spray-application device or devices.

The addition of the polyisocyanate crosslinker component to the unmodified water-borne base coats imparts to the resultant modified water-borne base coats technological properties, such as, for example, stone chip resistance and weathering resistance.

The unmodified water-borne base coat and the polyisocyanate crosslinker component are preferably mixed on the automotive substrate manufacturer's premises shortly or immediately before application of the resultant modified water-borne base coat on the automotive substrate.

The unmodified water-borne base coats in each case of a different color and the polyisocyanate crosslinker component are each conveyed in an own dedicated circulating line and the mixing is automatically performed, typically compliant with a defined and prescribed mixing ratio.

Application of the modified water-borne base coat can be performed using electrostatically-assisted high-speed rotary atomization, i.e. the outlet of the static mixer is preferably connected to one or more electrostatically-assisted high-speed rotary atomizers.

Application of the modified water-borne base coat can be followed by a brief flash-off phase of, for example, 30 seconds to 10 minutes at an air temperature of 20 to 100°C, after which in process step (2) the clear top coat is applied in a dry film thickness of, for example, 20 to 60 µm.

As already mentioned above, in an embodiment, in particular when an effect base coat is concerned, it is possible that the base coat layer is applied in two layers, wherein the first layer of the modified water-borne base coat is not directly overcoated with the clear top coat but with a layer of the corresponding unmodified water-borne base coat. Here, application of the modified water-borne base coat is preferably followed by a brief flash-off phase of, for example, 30 seconds to 5 minutes at an air temperature of 20 to 25°C, after which the corresponding unmodified water-borne base coat is applied. The spray application of the corresponding unmodified water-borne base coat may be electrostatically-assisted high-speed atomization or pneumatic spray application. Application of the unmodified water-borne base coat is preferably followed by a brief flash-off phase of, for example, 30 seconds to 10 minutes at an air temperature of 20 to 100°C, after which in process step (2) the clear top coat is applied in a dry film thickness of, for example, 20 to 60 µm.

All known clear coats are in principle suitable as the clear top coat. Usable clear coats are both solvent-borne one-component (1 pack) or two-component (2 pack) clear coats, water-dilutable 1 pack or 2 pack clear coats, powder clear coats or aqueous powder clear coat slurries.

After an optional flash-off phase, the applied base coat layer consisting of either the modified water-borne base coat or of the modified water-borne base coat plus the unmodified water-borne base coat and the clear top coat layer are jointly cured in process step (3), for example, by baking for 15 to 30 minutes at 70 to 170°C object temperature, which depends, among others, on the automotive substrate material.

### EXAM PLES

### Reference Example 1 (Preparation of an aqueous polyurethane urea resin dispersion):

24.08 pbw (parts by weight) of a polyesterdiol having a hydroxyl value of 112 mg of KOH/g (produced from hexanediol and a 2:1 molar mixture of adipic acid and isophthalic acid) and 1.32 pbw of dimethylolpropionic acid were mixed with 11.6 pbw of acetone in a reaction vessel equipped with stirrer and reflux condenser. 0.004 wt.% of dibutyltin dilaurate catalyst, relative to the polyesterdiol, were added. After heating the mixture to 50 °C 9.45 pbw of isophorone diisocyanate were added and the mixture was stirred at 50 °C until a constant NCO value was obtained. 0.88 pbw of dimethylisopropylamine were then added and the mixture was stirred at 50 °C until homogeneous. 54.79 pbw of deionized water were then added to form an aqueous dispersion, after which 6.48 pbw of a 6.25 wt.% aqueous solution of ethylenediamine were added at 40 °C. The temperature was then raised back up to 50 °C and this temperature was maintained for 2 hours. The reflux condenser was then replaced by a distillation bridge and the acetone was removed by distillation down to a residual acetone content of 3 wt.%. Any water entrained during distillation was replaced by establishing a resin solids content of 35 wt.% in the resultant polyurethane urea resin dispersion.

### Reference Example 2 (Preparation of a black unmodified waterborne base coat:

A black waterborne base coat was prepared by mixing the following constituents:

| Constituent | pbw |
|---|---|
| DAOTAN® VTW 1686/40WA from Cytec (aqueous dispersion of a polyester-modified acrylic polymer) | 14.0 |
| BAYHYDROL® U 2841 XP from Bayer (aqueous polyester polyurethane dispersion) | 15.4 |
| Aqueous polyurethane urea resin dispersion of reference example 1 | 7.6 |
| CYMEL® 303 melamine resin from Cytec | 1.0 |
| Carbon Black Dispersion¹⁾ | 10.0 |
| Talc dispersion²⁾ | 4.0 |
| Deionized water | 31.0 |
| DMEA (dimethylethanolamine), 10 wt.% solution in water | 2.5 |
| Butyl glycol Butyl diglycol | 1.0 1.3 |
| Hexyl glycol | 0.7 |
| Solvent mineral spirit Thickener³⁾ | 1.5 8.0 |
| Defoamer⁴⁾ | 2.0 |

| | |
|---|---|
| ¹⁾ Dispersion of 16 pbw carbon black, 13 pbw SOLSPERSE® 27000 from Lubrizol (nonionic surfactant), 22 pbw 2-amino-2-methyl-1-propanol (95wt.% in water), 48 pbw deionized water and 1 pbw defoamer⁴⁾. ²⁾ Dispersion of 36 pbw talc, 50.5 pbw deionized water, 6 pbw of a pigment dispersant (neutralized graft copolymer solution of Example 6 of US 5,231,131), 1.5 pbw 2-amino-2-methyl-1-propanol (95wt.% in water), 4 pbw thickener³⁾, 2 pbw defoamer⁴⁾. ³⁾ Mixture of 33 pbw VISCALEX® HV 30 from Allied Colloids, 2,5 pbw DMEA and 64.5 pbw deionized water. ⁴⁾ SURFYNOL® 104 from Air Products, 50 wt.% in butyl glycol. | |

### Reference Example 3 (Production of a Polyisocyanate Composition 1):

30 pbw of N-ethylpyrrolidone, 46 pbw of a hydrophilic aliphatic polyisocyanate based on hexamethylene diisocyanate with an NCO value of 17.4 and 24 pbw of DESMODUR® N 3600 from Bayer (trimerized hexamethylene diisocyanate with an NCO value of 23) were mixed.

### Reference Example 4 (Production of a Polyisocyanate Composition 2):

29.5 pbw of γ-butyrolactone, 46 pbw of a hydrophilic aliphatic polyisocyanate based on hexamethylene diisocyanate with an NCO value of 17.4 and 24.5 pbw of DESMODUR® N 3600 from Bayer (trimerized hexamethylene diisocyanate with an NCO value of 23) were mixed.

### Example 5 (Production and application of black modified waterborne base coats:

100 pbv (parts by volume) of the unmodified black waterborne base coat of reference example 2 were mixed with 10 pbv of the polyisocyanate composition 1 (PIC1) of reference example 3 making use of a Kenics mixer (length 188 mm). In a separate operation, 100 pbv of the unmodified black waterborne base coat of reference example 2 were mixed with 10 pbv of the polyisocyanate composition 2 (PIC2) of reference example 4 making use of a Kenics mixer (length 188 mm).

To simulate a line stop, the so-prepared black modified waterborne base coats were applied 15 and 30 minutes after mixing. The application was performed by spraying onto steel test panels precoated with a cured 18 µm thick EDC primer. After flashing-off for 5 minutes at 20 °C and additional 5 minutes at 70 °C object temperature the test panels were each spray coated with a commercial two-component (polyester/polyisocyanate) clear coat in 40 µm dry film thickness and after flashing-off for 7 minutes at 20 °C baked for 20 minutes at 140 °C object temperature.

Dullness, Wa, Wb, Wc, Wd and We values were determined on the clear coat surface with the measuring device Wavescan DOI from BYK-Gardner.

The test results are summarized in the following table.

| | Application 15 min after mixing | | Application 30 min after mixing | |
|---|---|---|---|---|
| | Base coat modified with PIC 1 | Base coat modified with PIC 2 | Base coat modified with PIC 1 | Base coat modified with PIC 2 |
| Dullness | 1.5 | 1.5 | 2.8 | 1.6 |
| Wa | 10.2 | 7.9 | 11.2 | 10.7 |
| Wb | 20.9 | 17.5 | 27.7 | 21.1 |
| Wc | 11.1 | 9.3 | 15.5 | 10.6 |
| Wd | 17.7 | 15.5 | 20.0 | 17.1 |
| We | 10.8 | 13.2 | 9.9 | 9.6 |

## Claims

1. A process for the production of an automotive OEM multi-layer coating, comprising the steps:
(1) applying a base coat layer onto an automotive substrate,
(2) applying a clear top coat layer onto the base coat layer, and
(3) jointly curing the base coat and clear top coat layers,
wherein the base coat layer is applied from a modified water-borne base coat produced by mixing an unmodified water-borne base coat with a polyisocyanate crosslinker component making use of a static mixer, and wherein the polyisocyanate crosslinker component comprises at least one polyisocyanate crosslinker and γ-butyrolactone as water-miscible solvent.

2. The process of claim 1, wherein between the application of the modified water-borne base coat and the clear top coat an additional coating layer is applied from the unmodified water-borne base coat.

3. The process of claim 1 or 2, wherein the mixing ratio for the preparation of the modified water-borne base coat lies in the range of 0.05 to 0.3 pbw of polyisocyanate crosslinker component : 1 pbw of unmodified water-borne base coat.

4. The process of any one of the preceding claims, wherein the unmodified water-borne base coat comprises a resin solids content with a hydroxyl value in the range of 5 to 120 mg KOH/g.

5. The process of any one of the preceding claims, wherein the polyisocyanate crosslinker component comprises 50 to 90 wt.% of the at least one polyisocyanate crosslinker and 10 to 50 wt.% of γ-butyrolactone.

6. The process of any one of the preceding claims, wherein the total isocyanate content of the at least one polyisocyanate crosslinker is in the range of 2 to 40 wt.% (calculated as NCO).

7. The process of any one of the preceding claims, wherein the at least one polyisocyanate crosslinker comprises one or more polyisocyanates with aliphatically, cycloaliphatically and/or araliphatically attached isocyanate groups.

8. The process of any one of the preceding claims, wherein the polyisocyanate crosslinker component comprises up to 20 wt.% of organic solvent(s) inert towards free isocyanate and other than γ-butyrolactone.

9. The process of any one of the preceding claims, wherein the polyisocyanate crosslinker component comprises γ-butyrolactone as the only organic solvent.

10. The process of any one of claims 1 to 4 or 6 to 8, wherein the polyisocyanate crosslinker component comprises 50 to 90 wt.% of the at least one polyisocyanate crosslinker, 10 to 50 wt.% of γ-butyrolactone, 0 to 20 wt.% of organic solvents inert towards free isocyanate and other than γ-butyrolactone, and 0 to 10 wt.% of at least one additive.

11. The process of any one of claims 1 to 4 or 6 to 8, wherein the polyisocyanate crosslinker component consists of 50 to 90 wt.% of the at least one polyisocyanate crosslinker, 10 to 50 wt.% of γ-butyrolactone, 0 to 20 wt.% of organic solvents inert towards free isocyanate and other than γ-butyrolactone, and 0 to 10 wt.% of at least one additive, wherein the sum of the wt. % totals 100 wt. %.

12. The process of any one of claims 1 to 4 or 6 to 9, wherein the polyisocyanate crosslinker component consists of 50 to 90 wt.% of the at least one polyisocyanate crosslinker and 10 to 50 wt.% of γ-butyrolactone, wherein the sum of the wt.% totals 100 wt.%.

## Patentansprüche

1. Verfahren zur Herstellung einer mehrschichtigen Kfz-Originalherstellerbeschichtung folgende Schritte umfassend:
(1) Aufbringen einer Basislackschicht auf ein Kfz-Substrat,
(2) Aufbringen einer klaren Decklackschicht auf die Basislackschicht und
(3) gemeinsames Härten der Basislackschicht und der klaren Decklackschicht,
wobei die Basislackschicht aus einem modifizierten wasserbasierten Basislack aufgebracht wird, der durch Mischen eines nicht modifizierten wasserbasierten Basislacks mit einer Polyisocyanat-Vernetzungsmittel-Komponente unter Verwendung eines statischen Mischers hergestellt wird, und wobei die Polyisocyanat-Vernetzungsmittel-Komponente mindestens ein Polyisocyanat-Vernetzungsmittel und ein γ-Butyrolacton als wassermischbares Lösemittel umfasst.

2. Verfahren nach Anspruch 1, wobei zwischen dem Aufbringen des modifizierten wasserbasierten Basislacks und des klaren Decklacks eine zusätzliche Lackschicht aus dem nicht modifizierten wasserbasierten Basislack aufgebracht wird.

3. Verfahren nach Anspruch 1 oder 2, wobei das Mischverhältnis für die Zubereitung des modifizierten wasserbasierten Basislacks im Bereich von 0,05 bis 0,3 bpw der Polyisocyanat-Vernetzungsmittel-Komponente zu 1 pbw nicht modifiziertem wasserbasierten Basislack liegt.

4. Verfahren nach einem der vorhergehenden Ansprüche, wobei der nicht modifizierte wasserbasierte Basislack einen Harzfeststoffgehalt mit einem Hydroxylwert im Bereich von 5 bis 120 mg KOH/g umfasst.

5. Verfahren nach einem der vorhergehenden Ansprüche, wobei die Polyisocyanat-Vernetzungsmittel-Komponente 50 bis 90 Gew.-% des mindestens einen Polyisocyanat-Vernetzungsmittels und 10 bis 50 Gew.-% γ-Butyrolacton umfasst.

6. Verfahren nach einem der vorhergehenden Ansprüche, wobei der Gesamtgehalt an Isocyanat des mindestens einen Polyisocyanat-Vernetzungsmittels im Bereich von 2 bis 40 Gew.-% (berechnet als NCO) liegt.

7. Verfahren nach einem der vorhergehenden Ansprüche, wobei das mindestens eine Polyisocyanat-Vernetzungsmittel ein oder mehrere Polyisocyanate mit aliphatisch, cycloaliphatisch und/oder araliphatisch angefügten Isocyanatgruppen umfasst.

8. Verfahren nach einem der vorhergehenden Ansprüche, wobei die Polyisocyanat-Vernetzungsmittel-Komponente bis zu 20 Gew.-% organische(s) Lösemittel umfasst, das/die gegenüber freiem Isocyanat inert und nicht γ-Butyrolacton ist/sind.

9. Verfahren nach einem der vorhergehenden Ansprüche, wobei die Polyisocyanat-Vernetzungsmittel-Komponente γ-Butyrolacton als das einzige organische Lösemittel umfasst.

10. Verfahren nach einem der Ansprüche 1 bis 4 oder 6 bis 8, wobei die Polyisocyanat-Vernetzungsmittel-Komponente 50 bis 90 Gew.-% des mindestens einen Polyisocyanat-Vernetzungsmittels, 10 bis 50 Gew.-% γ-Butyrolacton, 0 bis 20 Gew.-% organische Lösemittel, die gegenüber freiem Isocyanat inert und kein γ-Butyrolacton sind, und 0 bis 10 Gew.-% mindestens eines Additivs umfasst.

11. Verfahren nach einem der Ansprüche 1 bis 4 oder 6 bis 8, wobei die Polyisocyanat-Vernetzungsmittel-Komponente zu 50 bis 90 Gew.-% aus dem mindestens einen Polyisocyanat-Vernetzungsmittel, zu 10 bis 50 Gew.-% aus γ-Butyrolacton, zu 0 bis 20 Gew.-% aus organischen Lösemitteln, die gegenüber freiem Isocyanat inert und kein γ-Butyrolacton sind, und zu 0 bis 10 Gew.-% aus mindestens einem Additiv besteht, wobei die Summe der Gew.-% 100 Gew.-% ausmacht.

12. Verfahren nach einem der Ansprüche 1 bis 4 oder 6 bis 9, wobei die Polyisocyanat-Vernetzungsmittel-Komponente zu 50 bis 90 Gew. % aus dem mindestens einen Polyisocyanat-Vernetzungsmittel und zu 10 bis 50 Gew.-% aus γ-Butyrolacton besteht, wobei die Summe der Gew.-% 100 Gew.-% ausmacht.

## Revendications

1. Procédé de production d'un revêtement multicouche OEM pour automobile, comprenant les étapes consistant à :
(1) appliquer une couche de revêtement de base sur un substrat automobile,
(2) appliquer une couche de revêtement supérieur transparent sur la couche de revêtement de base, et
(3) durcir conjointement les couches de revêtement de base et de revêtement supérieur transparent,
dans lequel la couche de revêtement de base est appliquée à partir d'un revêtement de base à base d'eau modifié produit en mélangeant un revêtement de base à base d'eau non modifié avec un composant de réticulation à base de polyisocyanate en utilisant un mélangeur statique, et dans lequel le composant de réticulation à base de polyisocyanate comprend au moins un agent de réticulation à base de polyisocyanate et une γ-butyrolactone en tant que solvant miscible dans l'eau.

2. Procédé selon la revendication 1, dans lequel entre l'application du revêtement de base à base d'eau modifié et du revêtement supérieur transparent, une couche de revêtement supplémentaire est appliquée à partir du revêtement de base à base d'eau non modifié.

3. Procédé selon la revendication 1 ou 2, dans lequel le rapport de mélange pour la préparation du revêtement de base à base d'eau modifié est compris dans la plage allant de 0,05 à 0,3 partie en poids du composant de réticulation à base de polyisocyanate : 1 partie en poids de revêtement de base à base d'eau non modifié.

4. Procédé selon l'une quelconque des revendications précédentes, dans lequel le revêtement de base à base d'eau non modifié comprend une teneur en matières solides de résine ayant une valeur d'hydroxyle compris dans la plage allant de 5 à 120 mg de KOH/g.

5. Procédé selon l'une quelconque des revendications précédentes, dans lequel le composant de réticulation à base de polyisocyanate comprend de 50 à 90 % en poids d'au moins un agent de réticulation à base de polyisocyanate et de 10 à 50 % en poids de γ-butyrolactone.

6. Procédé selon l'une quelconque des revendications précédentes, dans lequel la teneur en isocyanate totale de l'au moins un agent de réticulation à base de polyisocyanate est comprise dans la plage allant de 2 à 40 % en poids (calculée sous forme de NCO).

7. Procédé selon l'une quelconque des revendications précédentes, dans lequel l'au moins un agent de réticulation à base de polyisocyanate comprend un ou plusieurs polyisocyanate ayant des groupes isocyanates attachés de manière aliphatique, cycloaliphatique et/ou araliphatique.

8. Procédé selon l'une quelconque des revendications précédentes, dans lequel le composant de réticulation à base de polyisocyanate comprend jusqu'à 20 % en poids d'un ou plusieurs solvants organiques inertes vis-à-vis de l'isocyanate libre et autres que de la γ-butyrolactone.

9. Procédé selon l'une quelconque des revendications précédentes, dans lequel le composant de réticulation à base de polyisocyanate comprend de la γ-butyrolactone en tant qu'unique solvant organique.

10. Procédé selon l'une quelconque des revendications 1 à 4 ou 6 à 8, dans lequel le composant de réticulation à base de polyisocyanate comprend de 50 à 90 % en poids de l'au moins un agent de réticulation à base de polyisocyanate, de 10 à 50 % en poids de γ-butyrolactone, de 0 à 20 % en poids de solvants organiques inertes vis-à-vis de l'isocyanate libre et autres que de la γ-butyrolactone, et de 0 à 10 % en poids d'au moins un additif.

11. Procédé selon l'une quelconque des revendications 1 à 4 ou 6 à 8, dans lequel le composant de réticulation à base de polyisocyanate comprend de 50 à 90 % en poids de l'au moins un agent de réticulation à base de polyisocyanate, de 10 à 50 % en poids de γ-butyrolactone, de 0 à 20 % en poids de solvants organiques inertes vis-à-vis de l'isocyanate libre et autres que de la γ-butyrolactone, et de 0 à 10 % en poids d'au moins un additif, la somme des % en poids étant équivalente à 100 % en poids

12. Procédé selon l'une quelconque des revendications 1 à 4 ou 6 à 9, dans lequel le composant de réticulation à base de polyisocyanate comprend de 50 à 90 % en poids de l'au moins un composant de réticulation à base de polyisocyanate et de 10 à 50 % en poids de γ-butyrolactone, la somme des % en poids étant équivalente à 100 % en poids.
